# EUROPÄISCHE PATENTSCHRIFT

(11) **EP 0 840 536 B1**
(45) Veröffentlichungstag und Bekanntmachung des Hinweises auf die Patenterteilung: **09.08.2000**
(21) Anmeldenummer: 97118600.2
(22) Anmeldetag: 25.10.1997
(51) Int. Cl.: H05B 37/02, G08B 13/193

(54) **Schalteinrichtung für eine Treppenhausbeleuchtung**
Switching device for staircase lighting
Dispositif de commutation pour éclairage de cage d'escalier

(30) Priorität: 02.11.1996 DE 19645184
(43) Veröffentlichungstag der Anmeldung: 06.05.1998
(73) Patentinhaber: ABB PATENT GmbH, 68309 Mannheim (DE)
(72) Erfinder: Rosch, Rainer, Dr., 58513 Lüdenscheid (DE); Zapp, Robert, 58579 Schalksmühle (DE)
(74) Vertreter: Rupprecht, Klaus, Dipl.-Ing.

(56) Entgegenhaltungen:
- EP-A- 0 652 422
- DE-A- 4 100 536
- US-A- 4 843 283
- PATENT ABSTRACTS OF JAPAN vol. 016, no. 067 (E-1168), 19. Februar 1992 & JP 03 261094 A (SEKISUI CHEM CO LTD), 20. November 1991

## Beschreibung

Die Erfindung betrifft eine Beleuchtungsanordnung in einem Treppenhaus gemäß dem Oberbegriff des Anspruchs 1.

Treppenhausbeleuchtungen sind an sich seit langem bekannt. Darunter werden üblicherweise Schaltungsanordnungen verstanden, die es erlauben, in mehrgeschossigen Gebäuden die in Form von Treppen gestalteten Wege ausreichend mit Licht auszuleuchten. Hierbei sind unterschiedliche Treppenhausbeleuchtungen zu unterscheiden.

Die einfachste Form einer Treppenhausbeleuchtung weist Schalter und Lampen auf, welche miteinander verschaltet sind und die Möglichkeit schaffen, an einer beliebigen Stelle des Treppenhauses durch manuelle Betätigung des dort befindlichen Schalters das Licht einzuschalten, so daß der betreffende Weg über die Treppe beleuchtet ist, und nach Erreichen des Zieles das Licht wieder auszuschalten.

Eine hiergegenüber verbesserte Form der Treppenhausbeleuchtung ist mit einem Zeitglied kombiniert, welches selbsttätig dafür sorgt, daß das per manueller Schalterbetätigung eingeschaltete Licht im Treppenhaus nach einer zuvor eingestellten Zeitspanne wieder ausgeschaltet wird.

Bei diesen beiden bekannten Varianten führt die Betätigung eines in den betreffenden Stromkreis der Treppenhausschaltung integrierten Schaltgeräts dazu, daß sämtliche Lampen eingeschaltet werden und erst nach erneuter manueller oder vom Zeitglied erfolgender Betätigung eines Schaltgerätes wieder ausgeschaltet wird. Insbesondere bei großen Treppenhäusern mit vielen Lampen, zum Beispiel in Hochhäusern, führt dies zu einem unnötigen Stromverbrauch, da die jeweilige Person, welche das Licht eingeschaltet hat, nur die Beleuchtung des jeweils begangenen Treppenabschnittes benötigt.

Aus der US-A-4 843 283 ist ein Beleuchtungssteuerungssystem mit einer Vielzahl von Infrarot-Erfassungssystemen bekannt, welche eine Mehrzahl von jeweils benachbarten Abtastbereichen überwachen.

Aus der DE-A-41 00 536 ist ein Infrarot-Bewegungsmelder bekannt, dessen Gehäuserückwand zwei Infrarotsensoren trägt, wodurch das Lichtfeld auf die örtlichen Gegebenheiten eingestellt werden kann.

Aus dem Patent Abstract of Japan Vol. 16, No. 67 (E-1168) & JP-A-3261094 ist eine Beleuchtungsanlage in einem Treppenhaus bekannt, welche eine Lampe in jedem Treppenabsatz aufweist, wobei die Ansteuerung dieser Lampen mittels Bewegungsmelder erfolgt, die zwischen den Treppenabsätzen installiert sind.

Aus der EP-A-652 422 ist ein Infrarot-Bewegungsmelder mit zwei Lichtsensoren und Linsensegmenten bekannt, wobei die Verarbeitung der elektrischen Ausgangsignale der Lichtsensoren getrennt erfolgt.

Ausgehend von diesem Stand der Technik ist es Aufgabe der Erfindung, eine Beleuchtungsanordnung in einem Treppenhaus zu schaffen, welche einfach gestaltet ist und einen möglichst sparsamen Gebrauch des zur Beleuchtung eines Treppenhauses benötigten Stromes ermöglicht.

Diese Aufgabe wird erfindungsgemäß durch die kennzeichnenden Merkmale des Patentanspruchs 1 gelöst. Weitere vorteilhafte Ausgestaltungen und Verbesserungen der Erfindung sind in den Unteransprüchen beschrieben.

Entsprechend der Erfindung arbeiten die Schaltgeräte mit Bewegungsmeldern zusammen, welche jeweils wenigstens einen einzelnen Treppenabschnitt überwachen und den Betriebsstrom zur Versorgung der diesem Abschnitt zugeordneten Lampen schalten. Hierdurch wird erreicht, daß jeweils nur der sogenannte aktive Bereich, das heißt der aktuell zu beleuchtende Treppenabschnitt, beleuchtet ist. Dies ist aufgrund der Erfassungsweite der in den Bewegungsmeldern eingesetzten Sensoren und deren kurzer Ansprechzeit zwischen Eintritt der Person in den betreffenden Bereich einerseits und Erfassen und Schalten andererseits als unproblematisch anzusehen.

Vorteilhaft ist es vorgesehen, daß jeder Bewegungsmelder einen aufführenden und einen abführenden Treppenabschnitt überwacht und den Betriebsstrom für alle Lampen schaltet, welche diesen Treppenabschnitten zugeordnet sind. Infolge der gleichzeitigen Erfassung der möglichen Ab- beziehungsweise Aufgänge ist für ausreichend Sicherheit gegen mögliche Unfälle wegen unzureichender Beleuchtung gesorgt.

Ein für eine Einrichtung der vorstehend beschriebenen Art geeigneter Bewegungsmelder, der üblicherweise mit einer Optik, mit wenigstens einem Sensor und einem diesem Sensor zugehörigen Schaltbaustein für Anschlußleiter versehen ist, ist erfindungsgemäß dadurch gekennzeichnet, daß die Optik in zwei getrennte Erfassungsbereiche unterteilt ist, denen jeweils ein Sensor mit einem zugehörigen Schaltbaustein zugeordnet ist.

Mit dieser Gestaltung ist einerseits eine getrennte Überwachung und Erfassung der zuvor erwähnten möglichen Ab- beziehungsweise Aufgänge möglich. Gleichzeitig ist durch die Kombination zweier Systeme in einem einzigen Bewegungsmelder eine vereinfachte Montage ermöglicht, da lediglich die elektrischen Anschlüsse doppelt ausgeführt sind, während die mechanischen Befestigungsmittel nur einfach vorhanden sind. Schließlich kommt die erfindungsgemäß vorgesehene Zusammenfassung zweier Systeme in einem gemeinsamen Gehäuse auch den baulichen Gegebenheiten entgegen, welche nicht immer die Anbringung zweier derartiger Geräte ohne zusätzlichen Aufwand gestatten.

In vorteilhafter Weiterbildung der Erfindung dient hierbei ein erster Erfassungsbereich der Optik für die Überwachung des aufführenden Treppenabschnitts und der zweite Erfassungsbereich der Optik für die Überwachung des abführenden Treppenabschnitts. Diese Aufteilung hat den Vorteil, daß stets nur der Bereich beleuchtet wird, der auch benutzt wird und daher beleuchtet werden soll.

Die Optiken für derartige Bewegungsmelder sind vorteilhafterweise für jeden Erfassungsbereich jeweils mit sämtlichen Linsen versehen, die bei der Vielzahl an baulichen Gestaltung benötigt werden könnten. Mittels Abschirmen oder Abkleben von Linsen können die Optiken dann im Hinblick auf die besonderen örtlichen Erfordernisse an die zu überwachenden Treppenabschnitte und deren geometrische Verhältnisse angepaßt werden.

Eine alternative Gestaltung hierzu kann darin bestehen, daß die Linsen der Optiken des Bewegungsmelders für jeden Erfassungsbereich einzeln auswechselbar und so für jeden zu überwachenden Treppenabschnitt entsprechend dessen baulicher Verhältnisse anpaßbar sind, das heißt je nach den örtlichen Gegebenheiten werden spezielle Linsenanordnungen zusammengestellt und am Bewegungsmelder angebracht.

Eine weitere vorteilhafte Ausgestaltung der Erfindung besteht darin, daß der Bewegungsmelder zum Einbau in eine Montagefläche als UP-Gerät ausgebildet ist, bei welchem lediglich die Optiken aus der Montagefläche hervorragen. Hierdurch kann der Bewegungsmelder in die vorhandene Architektur integriert werden, ohne störend aufzufallen.

Vorzugsweise ist ein Zeitglied in den Schaltbaustein integriert. Dieses Zeitglied schaltet den Betriebsstrom erst nach Ablauf einer voreingestellten Zeitspanne wieder ab.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine schematische Draufsicht auf einen Bewegungsmelder, wie er bei der erfindungsgemäßen Beleuchtungseinrichtung zur Anwendung kommt
- Fig. 2: Frontansicht des Bewegungsmelders gemäß Fig. 1 und
- Fig. 3: eine auszugsweise Draufsicht auf den Grundriß eines Treppenhauses in dem die erfindungsgemäße Beleuchtungseinrichtung zur Anwendung kommt.

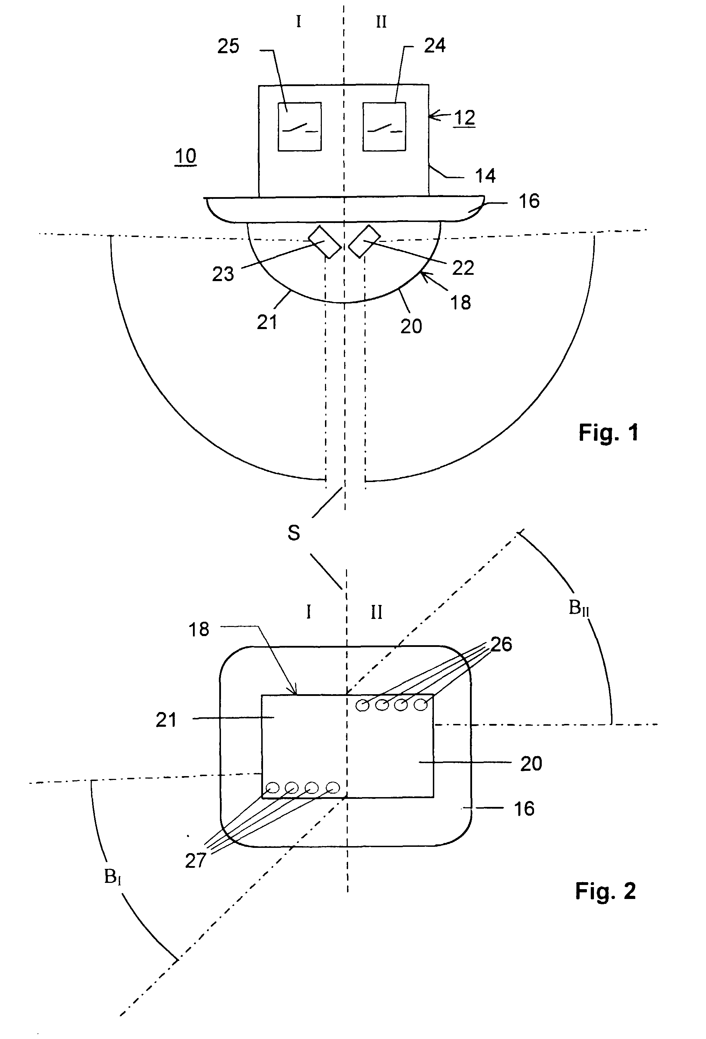

In Fig. 1 ist eine schematische Draufsicht auf den Grundriß eines Bewegungsmelders 10, wie er bei der erfindungsgemäßen Einrichtung zur Anwendung kommt. Anhand dieser Darstellung wird die Besonderheit deutlich, daß der Bewegungsmelder 10 zwei separate Systeme I und II aufweist, welche in einem gemeinsamen Gehäuse 12 bestehend aus einem Einbauteil 14 und einem Aufputzteil 16 mit einer daran angeordneten zweiteiligen Optik 18 untergebracht sind.

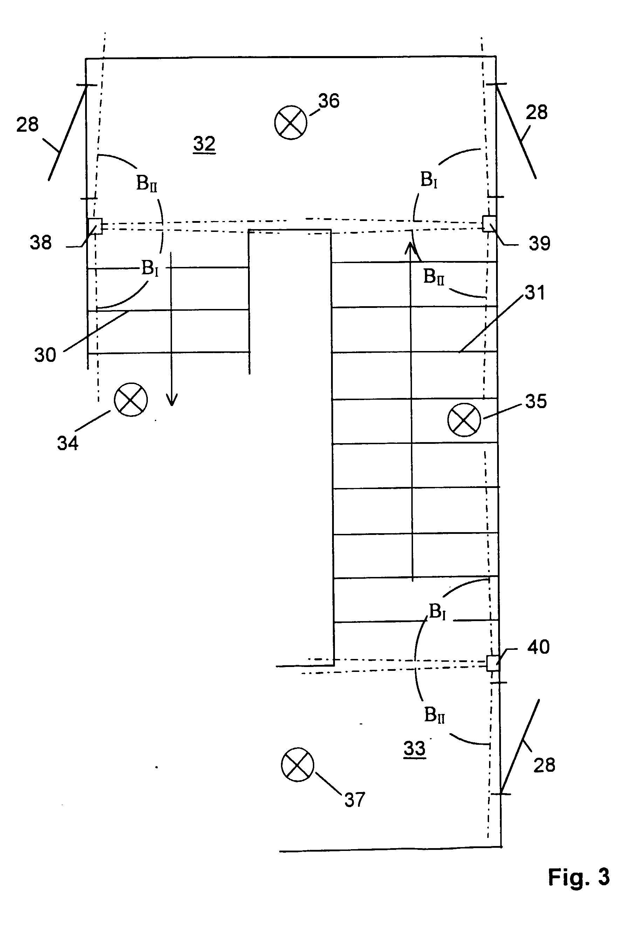

Jedes der Systeme I und II besitzt eine speziell zugeordnete Linsenanordnung 20, 21, welche Bestandteil der Optik 18 ist und durch welche die zu erfassenden Strahlensignale auf einen jeweils zugeordneten Sensor 22, 23 geleitet werden. Die Sensoren 22, 23 sind ihrerseits jeweils mit einem zugeordneten Schaltbaustein 24, 25 verbunden, welcher die erforderliche Schaltbetätigung zum Schalten des Stromes vornimmt, der jeweils die in dem betreffenden Treppenabschnitt 30, 31, wie er in Fig. 3 gezeigt ist, vorgesehenen Lampen speist.

Die beiden Systeme I und II sind entlang einer in Fig. 1 und auch in Fig. 2 strichliert eingezeichneten Linie "S" getrennt. Dementsprechend sind die Sensoren 22, 23, welche die zu erfassenden Signale aufnehmen, entsprechend im Winkel zu dieser Systemgrenze angestellt.

Wie in Verbindung mit der in Fig. 2 dargestellten Anordnung und Ausgestaltung der Linsenanordnungen 20, 21 der Optik 18 zu erkennen ist, sind signalverstärkende beziehungsweise fokussierende Linsenelemente 26, 27 entsprechend dem zu erfassenden Bereich zugewandt plaziert, das heißt im gezeigten Beispiel befinden sich derartige Linsenelemente 26, 27 an der Oberkante der Optik 18, wenn der zu erfassende Bereich 30 treppauf gerichtet ist und an der unteren Kante der Optik 18, wenn der zu erfassende Bereich 31 treppab gerichtet ist. Dies wird durch gestrichelt eingezeichnete, den beiden Systemen zugeordnete Linien B_{I} und B_{II} verdeutlicht

In Fig. 3 ist auszugsweise ein Treppenhaus mit Zugangstüren 28 sowie mit einem ersten Treppenabschnitt 30 und mit einem zweiten Treppenabschnitt 31 in Draufsicht dargestellt, denen jeweils ein Treppenabsatz 32, 33 zugeordnet ist.

Jedem dieser zu beleuchtenden Treppenabschnitte 30, 31 mit den Treppenabsätzen 32, 33 sind Lampen 34, 33, 35, 36, 37 zugeordnet, welche mit Bewegungsmeldern 38, 39, 40 zusammenarbeiten.

Entsprechend der aus Fig. 1 beziehungsweise aus Fig. 2 ersichtlichen Systemtrennung erfassen die an den Längsseitenwänden des Treppenhauses angeordneten Bewegungsmelder 38, 39, 40 jeweils zwei von strichlierten Linien B_{I} und B_{II} abgesteckte Bereiche. Hierbei arbeiten die jeweils benachbarten Systeme von einander benachbarten Bewegungsmeldern 38, 39, 40 insoweit zusammen, als sie dieselben Lampen mit Strom speisen, sobald sich eine Person in ihrem Erfassungsbereich befindet.

Anhand der in Fig. 3 gezeigten Anordnung soll die Funktion der erfindungsgemäßen Schalteinrichtung als Treppenhausbeleuchtung erläutert werden. Eine nicht näher dargestellte Person befinde sich auf dem Treppenabsatz 32, wo sie je nach Standort vom Erfassungsbereich B_{I} des Bewegungsmelders 39 oder vom Erfassungsbereich B_{II} des Bewegungsmelders 38 erfaßt wird, der dann die Lampe 36 einschaltet.

Sobald sich diese Person in den Treppenabschnitt 30 begibt, verläßt sie sowohl den Erfassungsbereich B_{I} des Bewegungsmelders 39 als auch den Erfassungsbereich B_{II} des Bewegungsmelders 38 und gelangt statt dessen in den Erfassungsbereich B_{I} des Bewegungsmelders 38, der die Lampe 34 einschaltet.

Entsprechendes gilt für den Bewegungsmelder 39, wenn sich die Person vom Treppenabsatz 32 in den Treppenabschnitt 31 begibt, wo die Lampe 35 eingeschaltet wird.

## Patentansprüche

1. Beleuchtungsanordnung in einem Treppenhaus mit Treppenabsätzen (32, 33), welche über aufführende und abführende Treppenabschnitte (30, 31) miteinander verbunden sind, wobei jeder Treppenabsatz und jeder Treppenabschnitt mit mindestens einer Lampe (34, 35, 36, 37) zur bedarfsgerechten Beleuchtung versehen ist, dadurch gekennzeichnet, daß bei mindestens einem Treppenabsatz (32) zwei Bewegungsmelder (38, 39) angeordnet sind, jeweils einer an jeder Längsseitenwand des Treppenhauses, und welche jeweils zwei getrennte Erfassungsbereiche überwachen, wobei
- der erste Erfassungsbereich (BI) des ersten Bewegungsmelders (38) zur Überwachung des abführenden Treppenabschnittes (3),
- der zweite Erfassungsbereich (BII) des ersten Bewegungsmelders (38) zur Überwachung des vor dem abführenden Treppenabschnitt befindlichen Teilbereichs des Treppenabsatzes (32),
- der zweite Erfassungsbereich (BII) des zweiten Bewegungsmelders (39) zur Überwachung des aufführenden Treppenabschnitts (31),
- der erste Erfassungsbereich (BI) des zweiten Bewegungsmelders (39) zur Überwachung des vor dem aufführenden Treppenabschnitt befindlichen Teilbereichs des Treppenabsatzes (32) dient und wobei
- über den ersten Erfassungsbereich des ersten Bewegungsmelders (38) der Betriebsstrom zur Versorgung der den abführenden Treppenabschnitt (30) beleuchtenden Lampe (34),
- über den zweiten Erfassungsbereich des zweiten Bewegungsmelders (39) der Betriebsstrom zur Versorgung der den aufführenden Treppenabschnitt (31) beleuchtenden Lampe (35) und
- sowohl über den ersten Erfassungsbereich des ersten (38) als auch über den zweiten Erfassungsbereich des zweiten Bewegungsmelders (39) der Betriebsstrom zur Versorgung der den Treppenabsatz (32) beleuchtenden Lampe (36) geschaltet wird.

2. Beleuchtungsanordnung nach Anspruch 1, dadurch gekennzeichnet, daß die Optiken der Bewegungsmelder für jeden Erfassungsbereich jeweils mit sämtlichen Linsen versehen sind und mittels Abschirmen oder Abkleben von Linsen an die zu überwachenden Treppenabschnitte und deren geometrische Verhältnisse anpaßbar ist.

3. Beleuchtungsanordnung nach Anspruch 1, dadurch gekennzeichnet, daß die Linsen der Optiken der Bewegungsmelder für jeden Erfassungsbereich einzeln auswechselbar und so für jeden zu überwachenden Treppenabschnitt entsprechend dessen baulicher Verhältnisse anpaßbar sind.

4. Beleuchtungsanordnung nach einem der vorstehenden Ansprüche, dadurch gekennzeichnet, daß die Bewegungsmelder zum Einbau in eine Montagefläche als UP-Geräte ausgebildet sind, bei welchen lediglich die Optiken aus der Montagefläche hervorragen.

5. Beleuchtungsanordnung nach einem der vorstehenden Ansprüche, dadurch gekennzeichnet, daß die Bewegungsmelder ein Zeitglied aufweisen, welches mit dem Schaltbaustein zusammenarbeitet und den angeforderten Betriebsstrom nach Ablauf einer voreingestellten Zeitspanne wieder abschaltet.

6. Beleuchtungsanordnung nach Anspruch 5, dadurch gekennzeichnet, daß das Zeitglied in den Schaltbaustein integriert ist.

## Claims

1. Lighting arrangement in a staircase with landings (32, 33) which are interconnected via ascending and descending flights of stairs (30, 31), each landing and each flight of stairs being provided with at least one lamp (34, 35, 36, 37) for lighting adequate to need, characterized in that there are arranged in the case of at least one landing (32) two motion detectors (38, 39), one for each longitudinal side wall of the staircase in each case, and which respectively monitor two separate detection areas, in which case
- the first detection area (BI [sic]) of the first motion detector (38) serves for monitoring the descending flight of stairs (3),
- the second detection area (BII [sic]) of the first motion detector (38) serves for monitoring the subarea of the flight of stairs (32) located before the descending flight of stairs,
- the second detection area (BII [sic]) of the second motion detector (39) serves for monitoring the ascending flight of stairs (31),
- the first detection area (BI [sic]) of the second motion detector (39) serves for monitoring the subarea of the landing (32) located before the ascending flight of stairs, and in which case
- the operating current is connected via the first detection area of the first motion detector (38) for the purpose of supplying the lamp (34) lighting the descending flight of stairs (30),
- the operating current is connected via the second detection area of the second motion detector (39) for the purpose of supplying the lamp (35) lighting the ascending flight of stairs (31), and
- the operating current is connected both via the first detection area of the first (38) motion detector and via the second detection area of the second motion detector (39) for the purpose of supplying the lamp (36) lighting the landing (32).

2. Lighting arrangement according to Claim 1, characterized in that the optical systems of the motion detectors for each detection area is [sic] respectively provided with all the lenses and can be adapted to the flights of stairs to be monitored and the geometrical conditions thereof by means of screening or masking off lenses.

3. Lighting arrangement according to Claim 1, characterized in that the lenses of the optical systems of the motion detectors for each detection area can be exchanged individually and can therefore be adapted for each flight of stairs to be monitored in accordance with the structural conditions thereof.

4. Lighting arrangement according to one of the preceding claims, characterized in that for the purpose of installation in a mounting surface the motion detectors are designed as flush-type units in the case of which only the optical systems project from the mounting surface.

5. Lighting arrangement according to one of the preceding claims, characterized in that the motion detectors have a timing element which co-operates with the switching module and switches off the demanded operating current again after expiry of a preset time interval.

6. Lighting arrangement according to Claim 5, characterized in that the timing element is integrated into the switching module.

## Revendications

1. Système d'éclairage pour une cage d'escalier comportant des paliers (32, 33) qui sont reliés entre eux par des tronçons d'escalier montants et descendants (30, 31), chaque palier et chaque tronçon d'escalier étant équipé d'au moins une lampe (34, 35, 36, 37) pour un éclairage adapté aux besoins, caractérisé par le fait que, sur au moins un palier (32), deux détecteurs de mouvement (38, 39) sont disposés chacun sur un mur de grand côté de la cage d'escalier, lesquels détecteurs surveillent chacun deux zones de détection distinctes,
- la première zone de détection (B_{I}) du premier détecteur de mouvement (38) surveillant le tronçon d'escalier descendant (30),
- la seconde zone de détection (B_{II}) du premier détecteur de mouvement (38) surveillant la partie du palier (32) située devant le tronçon d'escalier descendant,
- la seconde zone de détection (B_{II}) du second détecteur de mouvement (39) surveillant le tronçon d'escalier montant (31),
- la première zone de détection (B_{I}) du second détecteur de mouvement (39) surveillant la partie du palier (32) située devant le tronçon d'escalier montant et
- le courant de service pour l'alimentation de la lampe (34) qui éclaire le tronçon d'escalier descendant (30) étant commuté par l'intermédiaire de la première zone de détection du premier détecteur de mouvement (38),
- le courant de service pour l'alimentation de la lampe (35) qui éclaire le tronçon d'escalier montant (31) étant commuté par l'intermédiaire de la seconde zone de détection du second détecteur de mouvement (39) et
- le courant de service pour l'alimentation de la lampe (36) qui éclaire le palier (32) étant commuté par l'intermédiaire de la première zone de détection du premier détecteur de mouvement (38) et de la seconde zone de détection du second détecteur de mouvement (39).

2. Système d'éclairage selon la revendication 1, caractérisé par le fait que les optiques des détecteurs de mouvement, pour chaque zone de détection, sont munies chaque fois de toutes les lentilles et peuvent être adaptées aux tronçons d'escalier à surveiller et à leurs données géométriques par masquage de lentilles ou par application d'un adhésif sur les lentilles.

3. Système d'éclairage selon la revendication 1, caractérisé par le fait que les lentilles des optiques des détecteurs de mouvement, pour chaque zone de détection, peuvent être remplacées individuellement et ainsi peuvent être adaptées au tronçon d'escalier à surveiller en fonction des données constructives.

4. Système d'éclairage selon une des revendications précédentes, caractérisé par le fait que les détecteurs de mouvement , pour l'installation dans une surface de montage, sont conformés en appareils à encastrer, dans lesquels seules les optiques font saillie par rapport à la surface de montage.

5. Système d'éclairage selon une des revendications précédentes, caractérisé par le fait que les détecteurs de mouvement comportent un élément de temporisation qui coopère avec l'élément de commutation et coupe le courant de service après un délai de temporisation préréglé.

6. Système d'éclairage selon la revendication 6, caractérisé par le fait que l'élément de temporisation est intégré à l'élément de commutation.
